(19) Europäisches Patentamt
European Patent Office
Office européen des brevets

(11) EP 0 622 378 B1

(12) **EUROPÄISCHE PATENTSCHRIFT**

(45) Veröffentlichungstag und Bekanntmachung des Hinweises auf die Patenterteilung:
**24.09.1997 Patentblatt 1997/39**

(51) Int Cl.[6]: **C08F 8/14**, C08F 20/10

(21) Anmeldenummer: **94105943.8**

(22) Anmeldetag: **16.04.1994**

(54) **Alpha,omega-Polymethacrylatdiole, Verfahren zu ihrer Herstellung und deren Verwendung zur Herstellung von Polymeren, insbesondere Polyurethanen und Polyestern**

Alpha, omega-polymethacrylatediols, process for their preparation and their use for preparing polymers, in particular polyurethanes and polyesters

Alpha, omêga-diols à base de polyméthacrylate, procédé pour leur préparation et leur utilisation pour la préparation de polymères, en particulier de polyuréthanes et de polyesters

(84) Benannte Vertragsstaaten:
**BE CH DE FR GB IT LI NL**

(30) Priorität: **29.04.1993 DE 4314111**

(43) Veröffentlichungstag der Anmeldung:
**02.11.1994 Patentblatt 1994/44**

(73) Patentinhaber: **Th. Goldschmidt AG
45127 Essen (DE)**

(72) Erfinder:
- **Esselborn, Eberhard
D-45147 Essen (DE)**
- **Fock, Jürgen, Dr.
D-40470 Düsseldorf (DE)**

(56) Entgegenhaltungen:
**EP-A- 0 205 846** **DE-A- 4 121 811**
- **POLYMER PREPRINTS, Band 29, Nr. 2, September 1988 GORDON M. COHEN, "Alpha, Omega-Diols and Macromonomers through new reactions of group transfer polymers" Seiten 46-47**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 622 378 B1

Printed by Jouve, 75001 PARIS (FR)

## Beschreibung

Die Erfindung betrifft α,ω-Polymethacrylatdiole mit zwei endständigen Hydroxylgruppen. Die Erfindung betrifft ferner ein Verfahren zur Herstellung derartiger α,ω-Polymethacrylatdiole sowie deren Verwendung als reaktive Ausgangsverbindungen zur Herstellung von Polymeren, insbesondere Polyurethanen und Polyestern.

Die Herstellung von Polymethacrylaten mit endständig funktionellen Gruppen und insbesondere mit terminalen Hydroxylgruppen wurde in den letzten Jahren auf verschiedenartige Weise versucht, da derartige Verbindungen zur Herstellung von Blockmischpolymerisaten, zum Beispiel zur Herstellung von Polyestern oder Polyurethanen, von besonderem Interesse sind.

Man hat dabei insbesondere Versuche unternommen, derartige Polymethacrylatdiole auf dem Weg der Group-Transfer-Polymerisation zu erhalten. Voraussetzung für die Durchführung einer Group-Transfer-Polymerisation ist allerdings eine extrem hohe Reinheit der verwendeten Reagentien und der strenge Ausschluß von Luftfeuchtigkeit. Durch die Verwendung von nur mit sehr hohem Aufwand herstellbaren Initiatoren mit geschützten funktionellen Gruppen, wie im Houben-Weyl, Methoden der organischen Chemie, Bd. E 20 / Teil 1, Tab. 18, S. 158 ff., aufgeführt, gelangt man aber nur zu monofunktionellen Polymeren, die eine enge Molekulargewichtsverteilung aufweisen. Die Synthese von α,ω-difunktionellen Polymeren ist über diesen bislang einzigen Zugang nicht oder nur mit hohem Aufwand in unvollständiger Weise möglich (D.Y. Sogah und O.W. Webster, J. Polym. Sci., Polym. Lett. Ed. 21, 927 (1983)).

Ein weiterer Syntheseweg zur Herstellung α,ω-terminierter Polymethacrylate wurde in jüngster Zeit unter Verwendung von Thiuramdisulfiden, welche Hydroxyethylgruppen enthalten, beschritten. Die Synthese erfolgt nach der sogenannten "Iniferter" Technik (Initiator, Transferagens, Terminator). Zwar weisen die erhaltenen Produkte eine Funktionalität auf, die der erwünschten von 2 nahe kommt, jedoch sind die Produkte, bedingt durch die hohe Empfindlichkeit gegen hydrolytische und thermische Belastungen nur begrenzt einsetzbar (C.P. Reghunadham et al., J. Polymer Sci., part A: Pol. Chem. 27, 1795 (1989)).

Die vorliegende Erfindung befaßt sich mit dem technischen Problem der leichten Herstellbarkeit solcher α,ω-Polymethacrylatdiole, wobei der Gehalt an Polymethacrylaten mit einer Funktionalität von $< 2$ oder $> 2$ möglichst gleich 0 sein soll.

Gegenstand der Erfindung sind neue α,ω-Polymethacrylatdiole der allgemeinen Formel

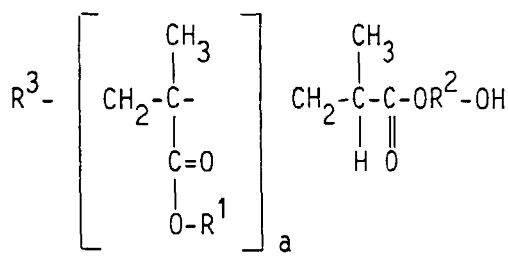

wobei

$R^1$ ein gegebenenfalls halogenierter Alkylrest mit 1 bis 10 Kohlenstoffatomen ist,

$R^2$ (1) ein zweiwertiger aliphatischer, gegebenenfalls ungesättigter Kohlenwasserstoffrest mit 2 bis 20 Kohlenstoffatomen, ein cycloaliphatischer Kohlenwasserstoffrest mit 5 bis 10 Kohlenstoffatomen oder ein aliphatisch-aromatischer Kohlenwasserstoffrest mit 8 bis 20 Kohlenstoffatomen,
(2) ein zweiwertiger aliphatischer Etherrest $-R^5-O-R^6-$, dessen Reste $R^5$ und $R^6$ zusammen 4 bis 20 Kohlenstoffatome aufweisen, oder
(3) ein Polyetherrest der allgemeinen Formel
$-(C_nH_{2n}O)_m-C_pH_{2p}-$, wobei der Index n einen Wert von 2 bis 4, der Index m einen Wert von $\geq 1$ und der Index p einen Wert von 2, 3 oder 4 hat,
ist,

$R^3$ der Rest

$$-S-CH_2CH_2-OH,\ -S-CH_2CH_2CH_2CH_2-OH,$$

$-S-CH_2CH_2CH_2CH_2CH_2CH_2-OH$ oder $-S-CH_2-C_6H_4-CH_2OH$

ist, und

a einen Wert von ≥ 4 hat.

$R^1$ ist vorzugsweise ein Methyl-, Butyl- oder 2-Ethylhexylrest.

$R^2$ kann verschiedene Bedeutungen haben und ist vorzugsweise

(1) ein zweiwertiger Alkylenrest mit 2 bis 12, insbesondere 2 bis 6 Kohlenstoffatomen, ein Cyclohexylrest oder ein Xylylenrest,

(2) ein zweiwertiger aliphatischer Etherrest, insbesondere der Rest $-CH_2-CH_2-O-CH_2-CH_2-$,

(3) ein Polyetherrest der Formel $-(C_nH_{2n}O)_m-C_pH_{2p}-$, wobei n = 2 bis 2,5, m = 5 bis 100 und p = 3 ist.

Von besonderer Bedeutung ist, daß der Rest $R^3$ der Rest eines an sich bekannten Kettenreglers ist, welcher endständig eine Hydroxylgruppe aufweist.

Beispiele erfindungsgemäßer Verbindungen sind:

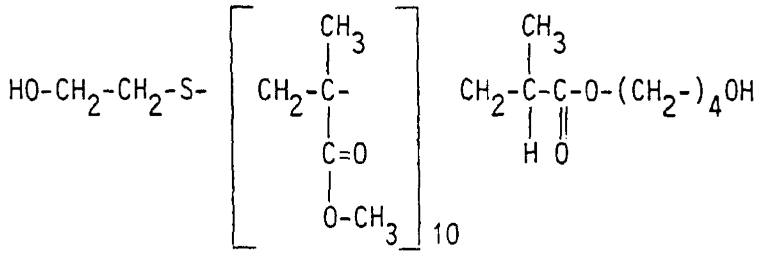

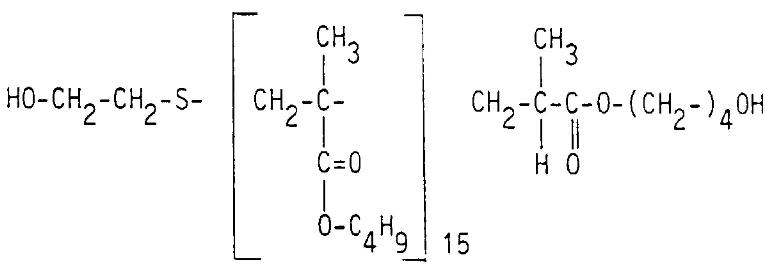

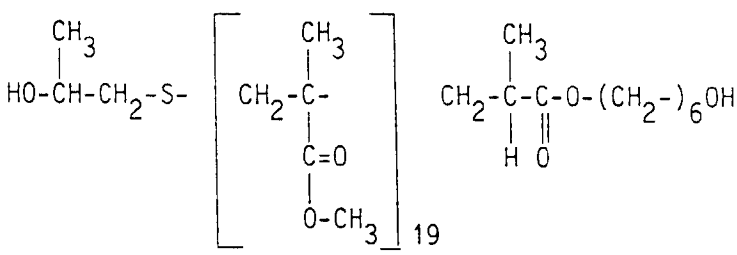

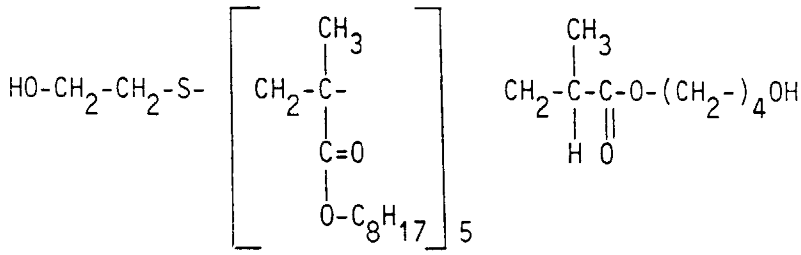

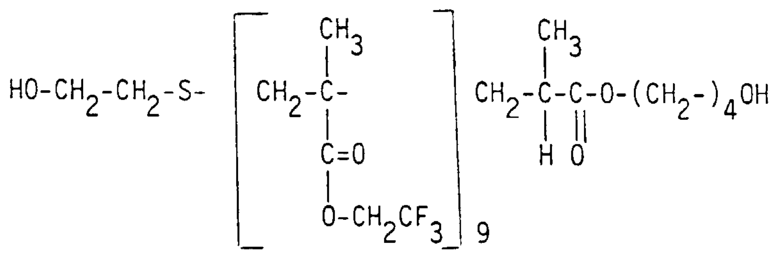

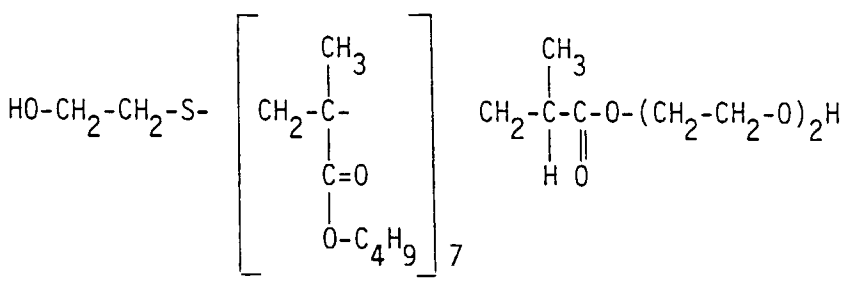

Ein weiterer Gegenstand der vorliegenden Erfindung besteht in dem Verfahren zur Herstellung der erfindungsgemäßen Verbindungen. Dieses Verfahren ist dadurch gekennzeichnet, daß man durch radikalische Polymerisation in Gegenwart eines Kettenreglers erhaltene Polymethacrylsäureester der allgemeinen Formel

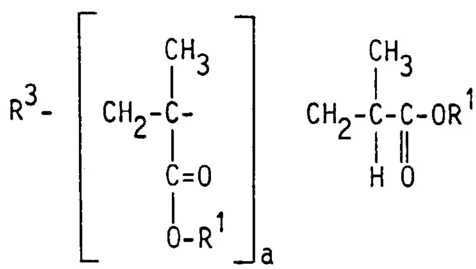

wobei die Reste $R^1$ und $R^3$ und der Index a die bereits angegebene Bedeutung haben, mit einem Diol der Formel HO-$R^2$-OH bei Temperaturen von 70 bis 140°C, gegebenenfalls in Gegenwart von Lösungsmitteln, unter Zusatz von an sich bekannten nichtbasischen Umesterungskatalysatoren in einem molaren Verhältnis von Polymethacrylsäureester : HO-$R^2$-OH von 1 : 1 bis 1 : 10 umestert und den Überschuß an nichtumgesetztem Diol in an sich bekannter Weise durch Destillation oder Auswaschen mit einem Lösungsmittel, in welchem das Diol löslich, das Polymere jedoch unlöslich ist, entfernt.

Es hat sich dabei überraschenderweise gezeigt, daß die endständige, am tertiären Kohlenstoffatom befindliche Estergruppe in überraschender Weise erheblich schneller reagiert als die am anderen Kettenende oder gar in der Kette an quaternären Kohlenstoffatomen befindlichen Estergruppen.

Besonders bevorzugt ist ein molares Verhältnis von Polymethacrylsäureester : HO-$R^2$-OH von 1 : 1 bis 1 : 5.

Der bevorzugte Temperaturbereich für die Umesterung liegt bei 90 bis 130°C.

Beispiele für Polymethacrylsäureester, welche bei dem erfindungsgemäßen Verfahren eingesetzt werden können, sind Polymethylmethacrylat, Polyethylmethacrylat, Poly-n-butylmethacrylat, Poly-i-butylmethacrylat, Poly-t-butylmethacrylat, Poly-n-octylmethacrylat, Poly-2-ethylhexylmethacrylat, Poly-n-decylmethacrylat, Polytrifluorethylmethacrylat und Polyperfluoroctylethylmethacrylat.

Beispiele für die Umesterungsreaktion geeigneter Diole sind Ethylenglykol; Propandiol-1,2 oder -1,3; Butandiol-1,2, -1,3 oder -1,4; Neopentylglykol; Hexandiol-1,6; Octandiol-1,8; Decandiol-1,10; Dodecandiol-1,12; Cyclopentandiol-1,2; Cyclohexandiol-1,2, -1,4; Dihydroxymethylbenzol-1,2; Diethylenglykol; Triethylenglykol; Polyethylenglykol; Polypropylenglykol; Polybutylenglykol; Polyoxyethylen-Polyoxypropylen-Diole; Buten-2,3-diol-1,4; 1,4-Dihydroxymethylbenzol.

Vorzugsweise setzt man bei der Umesterung aus dem Stand der Technik für die Reaktion bekannte Katalysatoren ein, wie Alkyltitanant, wie Butyltitanat oder Isopropyltitanat oder die entsprechenden Alkylzirkonate, ferner Stannate, wie Dialkylzinnacetathalogenid oder Dialkylzinndialkylester, insbesondere Dibutylzinndilaurat, Dibutylzinndiacetat und Dibutylzinnacetatchlorid. Die Katalysatoren werden in Mengen von 0,5 bis 2 Gew.-%, bezogen auf Polymethacrylsäureester, verwendet. Vorzugsweise verwendet man 0,5 bis 1 Gew.-% Katalysator.

Ein weiterer Gegenstand der Erfindung besteht in der Verwendung der Verbindungen als alleinige oder anteilige Diolkomponente zur Herstellung von Polyestern und Polyurethanen, sowie zur Modifizierung von Alkyd- und Epoxidharzen. Da die erfindungsgemäßen Verbindungen sehr exakt eine Funktionalität von 2 aufweisen, fungieren sie ausschließlich als kettenverlängernde Polymerblöcke. Vergelung durch höhere Funktionalität oder Kettenabbruch durch Monofunktionalität wird nicht beobachtet. Es gelingt somit, Blockpolymere oder Blockcopolymere, wie Polyester oder Polyurethane mit Polymethacrylatblöcken herzustellen, welche anwendungstechnisch besonders vorteilhafte Eigenschaften aufweisen. Von Interesse ist auch die Möglichkeit, reaktive Harze mit den erfindungsgemäßen Polymeren zu modifizieren, wobei in erster Linie Alkydharze und Epoxidharze zu nennen sind. Es ist natürlich auch möglich, eine oder beide endständige Hydroxylgruppen zu derivatisieren und hierdurch Verbindungen zu erhalten, die als solche unmittelbar verwendbar sind oder reaktive Zwischenprodukte darstellen.

In den folgenden Beispielen 1 A bis 10 A wird die nichterfindungsgemäße Herstellung der als Ausgangsverbindungen dienenden Polymethylmethacrylate gezeigt. Die Beispiele 1 B bis 14 B dienen der Erläuterung des erfindungsgemäßen Verfahrens.

In den Beispielen 1 C bis 6 C wird die Verwendung der erfindungsgemäßen $\alpha,\omega$-Polymethacrylatdiole als Polyole zur Herstellung von Polyurethanen und Polyestern gezeigt.

Beispiel 1 A

Herstellung eines $\omega$-monohydroxyfunktionellen Polymethylmethacrylates (nicht erfindungsgemäß)

In einem Reaktor werden 400 g Toluol unter Reinstickstoff auf 100°C erhitzt. Zu dieser Vorlage wird eine Lösung von 2950 g (ca. 29,5 Mol) Methylmethacrylat, 249,6 g (ca. 3,2 Mol) $\beta$-Mercaptoethanol und 9,6 g Azodiisobuttersäuredinitril, gelöst in 400 g Toluol, mit konstanter Geschwindigkeit innerhalb von 280 Minuten zugetropft. Nach einer Nachreaktion mit einer Dauer von 75 Minuten bei 100°C wird die Reaktion beendet.

Das entstandene Produkt wird anschließend durch Destillation bei 130°C und 1,333 x $10^3$ Pa (10 Torr) vom Lösungsmittel und von Restmonomeren befreit; es verbleibt eine hochviskose, transparente und leicht gelbliche Flüssigkeit.

Aus der gelchromatographischen Untersuchung ergibt sich für das erhaltene Polymerisat ein numerisches Molekulargewicht $\overline{M}_n$ von 1150 und das Gewichtsmittel des Molekulargewichtes $\overline{M}_w$ von 1840; der heitlichkeitskoeffizient U beträgt demnach 1,6. Das durch Dampfdruckosmometrie ermittelte Molekulargewicht $\overline{M}_{nOsm}$ = 1120 ergibt zusammen mit dem aus der Hydroxylzahl ermittelten Molekulargewicht $\overline{M}_{nOHZ}$ = 1130 eine Funktionalität von 0,99. Der Gehalt an Restmonomeren ist < 0,1 %.

Beispiele 2 A bis 5 A

Herstellung von $\omega$-monohydroxyfunktionellen Polymethylmethacrylaten unterschiedlicher Molekulargewichte (nicht erfindungsgemäß)

Es wird grundsätzlich wie in Beispiel 1 A verfahren mit dem Unterschied, daß, wie aus Tabelle 1 hervorgeht, die Menge an Kettenübertragungsagens, die Initiatormenge und die Festkörperkonzentration gesenkt und zusätzlich vor der Fraktionierung Triethylenglykoldimethylether als zusätzliches Lösungsmittel eingesetzt werden. Darüber hinaus wird zur besseren Abtrennung der Restmonomeren und der besseren Trennung der Lösungsmittel fraktioniert, wobei ggf. die Siedetemperatur erhöht bzw. der Druck erniedrigt wird.

In Tabelle 1 werden neben der Art und Menge des eingesetzten Methacrylats die Menge an $\beta$-Mercaptoethanol, an Azodiisobuttersäurenitril und an Lösungsmittel Toluol, Xylol bzw. Triethylenglykoldimethylether angegeben. Darüber hinaus finden sich in Tabelle 1 die durch gelchromatographische Untersuchung ermittelten Zahlen- und Gewichtsmittel

der Molekulargewichte und die entsprechenden Uneinheitlichkeitskoeffizienten sowie die durch dampfdruckosmometrische Messung und durch die Bestimmung der Hydroxylzahl erhaltenen Molekulargewichte und schließlich die daraus berechneten Funktionalitäten.

Beispiel 6 A

Herstellung eines ω-monohydroxyfunktionellen Poly-n-butylmethacrylates (nicht erfindungsgemäß)

Es wird grundsätzlich wie in Beispiel 1 A verfahren mit dem Unterschied, daß anstelle von Methylmethacrylat 2950 g (ca. 20,7 Mol) n-Butylmethacrylat eingesetzt werden.

In Tabelle 1 werden neben der Art und Menge des eingesetzten Methacrylates die Menge an β-Mercaptoethanol, an Azodiisobuttersäurenitril und an Lösungsmittel Toluol angegeben. Darüber hinaus finden sich in Tabelle 1 die durch gelchromatographische Untersuchung ermittelten Zahlen- und Gewichtsmittel der Molekulargewichte und die entsprechenden Uneinheitlichkeitskoeffizienten sowie die durch dampfdruckosmometrische Messung und durch die Bestimmung der Hydroxylzahl erhaltenen Molekulargewichte und schließlich die daraus berechneten Funktionalitäten.

Beispiel 7 A

Herstellung eines ω-monohydroxyfunktionellen Poly-n-butylmethacrylates höheren Molekulargewichtes (nicht erfindungsgemäß)

Es wird grundsätzlich wie in Beispiel 6 A verfahren mit dem Unterschied, daß, wie aus Tabelle 1 hervorgeht, die Menge an Kettenübertragungsagens, die Initiatormenge und die Festkörperkonzentration gesenkt werden.

In Tabelle 1 werden neben der Art und Menge des eingesetzten Methacrylates die Menge an β-Mercaptoethanol, an Azodiisobuttersäurenitril und an Lösungsmittel Toluol angegeben. Darüber hinaus finden sich in Tabelle 1 die durch gelchromatographische Untersuchung ermittelten Zahlen- und Gewichtsmittel der Molekulargewichte und die entsprechenden Uneinheitlichkeitskoeffizienten sowie die durch dampfdruckosmometrische Messung und durch die Bestimmung der Hydroxylzahl erhaltenen Molekulargewichte und schließlich die daraus berechneten Funktionalitäten.

Beispiel 8 A

Herstellung eines ω-monohydroxyfunktionellen Poly-2-ethylhexylmethacrylates (nicht erfindungsgemäß)

Es wird grundsätzlich wie in Beispiel 1 A verfahren mit dem Unterschied, daß anstelle von Methylmethacrylat 2950 g (ca. 14,9 Mol) 2-Ethylhexylmethacrylat eingesetzt werden. Darüber hinaus werden, wie aus Tabelle 1 hervorgeht, die Menge an Kettenübertragungsagens, die Initiatormenge und die Festkörperkonzentration gesenkt und die Destillation bei Temperaturen bis 150°C und einem Druck von 1 Torr durchgeführt.

In Tabelle 1 werden neben der Art und Menge des eingesetzten Methacrylates die Menge an β-Mercaptoethanol, an Azodiisobuttersäurenitril und an Lösungsmittel Toluol angegeben. Darüber hinaus finden sich in Tabelle 1 die durch gelchromatographische Untersuchung ermittelten Zahlen- und Gewichtsmittel der Molekulargewichte und die entsprechenden Uneinheitlichkeitskoeffizienten sowie die durch dampfdruckosmometrische Messung und durch die Bestimmung der Hydroxylzahl erhaltenen Molekulargewichte und schließlich die daraus berechneten Funktionalitäten.

Beispiel 9 A

Herstellung eines ω-monohydroxyfunktionellen Poly-2-ethylhexylmethacrylates höheren Molekulargewichtes (nicht erfindungsgemäß)

Es wird grundsätzlich wie in Beispiel 8 A verfahren mit dem Unterschied, daß, wie aus Tabelle 1 hervorgeht, die Menge an Kettenübertragungsagens, die Initiatormenge und die Festkörperkonzentration senkt werden.

In Tabelle 1 werden neben der Art und Menge des eingesetzten Methacrylates die Menge an β-Mercaptoethanol, an Azodiisobuttersäurenitril und an Lösungsmittel Xylol angegeben. Darüber hinaus finden sich in Tabelle 1 die durch gelchromatographische Untersuchung ermittelten Zahlen- und Gewichtsmittel der Molekulargewichte und die entsprechenden Uneinheitlichkeitskoeffizienten sowie die durch dampfdruckosmometrische Messung und durch die Bestimmung der Hydroxylzahl erhaltenen Molekulargewichte und schließlich die daraus berechneten Funktionalitäten.

Beispiel 10 A

Herstellung von ω-monohydroxyfunktionellem Methylmethacrylat-2-Ethylhexylmethacrylat-Copolymerisat (nicht erfindungsgemäß)

Es wird grundsätzlich wie in Beispiel 8 A verfahren mit dem Unterschied, daß anstelle von Methylmethacrylat allein ein Gemisch von 990 g (ca. 9,9 Mol) Methylmethacrylat und 1960 g (ca. 9,9 Mol) 2-Ethylhexylmethacrylat im Molverhältnis 1 : 1 eingesetzt wird.

In Tabelle 1 werden neben der Art und Menge des eingesetzten Methacrylates die Menge an β-Mercaptoethanol, an Azodiisobuttersäurenitril und an Lösungsmittel Xylol angegeben. Darüber hinaus finden sich in Tabelle 1 die durch gelchromatographische Untersuchung ermittelten Zahlen- und Gewichtsmittel der Molekulargewichte und die entsprechenden Uneinheitlichkeitskoeffizienten sowie die durch dampfdruckosmometrische Messung und durch die Bestimmung der Hydroxylzahl erhaltenen Molekulargewichte und schließlich die daraus berechneten Funktionalitäten.

Tabelle 1

| Bei-spiel Nr. | Methacrylat Art | Menge [g]/[Mol] | β-Mercaptoethanol [g] / [Mol] | ADBN [g] | Lösungsmittel Art / Menge [g] | $\bar{M}_{w_{GPC}}$ | $\bar{M}_{n_{GPC}}$ | U | $\bar{M}_{n_{Osm}}$ | $\bar{M}_{n_{OHZ}}$ | f |
|---|---|---|---|---|---|---|---|---|---|---|---|
| 1 A | MMA | 2950 / 29,5 | 250 / 3,2 | 9,6 | TL / 800 | 1840 | 1150 | 1,6 | 1120 | 1130 | 0,99 |
| 2 A | MMA | 2950 / 29,5 | 125 / 1,6 | 6,3 | TL / 800 | 4160 | 2310 | 1,8 | 2350 | 2430 | 0,98 |
| 3 A | MMA | 2950 / 29,5 | 50 / 0,64 | 4,4 | TLTG / 3000 | 12600 | 5260 | 2,4 | 5500 | 5670 | 0,97 |
| 4 A | MMA | 2950 / 29,5 | 12,5 / 0,32 | 3,0 | TLTG / 4000 | 29100 | 10400 | 2,8 | 10800 | 11400 | 0,95 |
| 5 A | MMA | 2950 / 29,5 | 5 / 0,064 | 3,0 | TLTG / 12000 | 164000 | 53000 | 3,1 | - | - | - |
| 6 A | BMA | 2950 / 20,7 | 250 / 3,2 | 9,6 | TL / 800 | 1750 | 1170 | 1,5 | 1140 | 1150 | 0,99 |
| 7 A | BMA | 2950 / 20,7 | 125 / 1,6 | 6,3 | XY / 800 | 4300 | 2530 | 1,7 | 2300 | 2350 | 0,98 |
| 8 A | EHMA | 2950 / 14,9 | 250 / 3,2 | 9,6 | TL / 800 | 1800 | 1200 | 1,5 | 1170 | 1180 | 0,99 |
| 9 A | EHMA | 2950 / 14,9 | 125 / 1,6 | 6,3 | XY / 800 | 4100 | 2300 | 1,8 | 2350 | 2420 | 0,97 |
| 10 A | MMA/ EHMA | 990 / 9,9/ 1960 9,9 | 250 / 3,2 | 9,6 | XY / 800 | 1900 | 1180 | 1,6 | 1150 | 1170 | 0,98 |

Legende:

MMA = Methylmethacrylat
BMA = n-Butylmethacrylat
EHMA = 2-Ethylhexylmethacrylat
ADBN = Azodiisobuttersäurenitril
TL = Toluol
XY = Xylol
TLTG = Gemisch Toluol/Triethylenglykoldimethylether (1 : 1)
U = Uneinheitlichkeitskoeffizient
f = *Funktionalität*

Beispiel 1 B

Herstellung eines α,ω-dihydroxyfunktionellen Polymethacrylates durch polymeranaloge Umesterung mit Butandiol-1,4 im Molverhältnis 1 : 5 (erfindungsgemäß)

1120 g (ca. 1 Mol) des α-hydroxyfunktionellen Polymethylmethacrylates aus Beispiel 1 A, gelöst in 350 g Toluol, werden in einem Reaktor durch Destillation vom Lösungsmittel befreit. Anschließend werden 450 g (ca. 5 Mol) Butandiol-1,4 und 11,2 g Isopropyltitanat hinzugegeben. Die Reaktion wird bei einer Temperatur von 130°C bei 5 Torr durchgeführt, wobei das entstehende Methanol durch Fraktionierung vom Butandiol-1,4 getrennt, entfernt und in zwei hintereinander geschalteten Kühlfallen kondensiert wird. Die Reaktion ist nach ca. 4 h beendet, was durch die Beendigung der Methanolentwicklung angezeigt wird.

Das entstandene Rohprodukte wird mit 90 g einer 20 %igen wäßrigen Lösung von $NaH_2PO_4$ versetzt und danach viermal mit je 500 g einer 20 %igen wäßrigen Lösung von NaCl gewaschen, wobei das überschüssige Butandiol-1,4 und der Katalysator entfernt werden. Schließlich wird das Produkt bei 150°C und 10 Torr durch Destillation getrocknet, mit 1000 g Toluol aufgenommen und filtriert. Das Lösungsmittel wird wiederum durch Destillation entfernt; der verbleibende Rest an Butandiol-1,4 beträgt < 0,1 %.

Aus der gelchromatographischen Untersuchung ergibt sich für das erhaltene Polymerisat ein numerisches Molekulargewicht $\overline{M}_n$ von 1220 und das Gewichtsmittel des Molekulargewichtes $\overline{M}_w$ von 1950; der Uneinheitlichkeitskoeffizient beträgt demnach 1,6. Das durch Dampfdruckosmometrie ermittelte Molekulargewicht $\overline{M}_{nOsm}$ von 1180 ergibt zusammen mit dem aus der Hydroxylzahl ermittelten Molekulargewicht $\overline{M}_{nOHZ}$ von 1186 eine Funktionalität von 1,99.

Der Einsatz der "Matrix Assisted Laser Absorption Ionisation Mass Spectroscopy (MALDI-MS)" als Methode zur Ermittlung der absoluten Molekulargewichte ergibt eine Homologenreihe mit Molekulargewichten von n*100 + 159, was nach Subtraktion des Molekulargewichtes des adsorbierten Natriumions exakt dem Molekulargewicht des monomeren α,ω-dihydroxyfunktionellen Polymethacrylates entspricht. Darüber hinaus ist eine Homologenreihe des Dimeren mit Molekulargewichten von 2n*100 + 405 in allerdings geringer Konzentration sichtbar; auch hier ist das Molekulargewicht des Natriumions zu berücksichtigen.

Beispiel 2 B

Herstellung eines α,ω-difunktionellen Polymethacrylates durch polymeranaloge Umesterung von ω-monohydroxyfunktionellem Polymethylmethacrylat mit Butandiol-1,4 im Molverhältnis 1 : 1 (erfindungsgemäß)

Es wird grundsätzlich wie in Beispiel 1 B verfahren mit dem Unterschied, daß anstelle von 5 Mol Butandiol-1,4 1 Mol eingesetzt wird.

In Tabelle 2 werden neben dem bei der Umesterung verwendeten ω-monohydroxyfunktionellen Polymethacrylat die Art und das Molverhältnis der verwendeten Diole (Diol/Polymethacrylat), die Reaktionsbedingungen, die Menge des Katalysators, der jeweils zu 1 Gew.-%, bezogen auf die Gesamteinwaage, eingesetzt wird und die Menge an Toluol angegeben. Darüber hinaus werden die entsprechenden analytischen Daten angegeben.

Beispiele 3 B bis 6 B

Herstellung von α,ω-difunktionellen Polymethylmethacrylaten verschiedener Molekulargewichte (erfindungsgemäß)

Es wird grundsätzlich wie in Beispiel 1 B verfahren mit dem Unterschied, daß die ω-monohydroxyfunktionellen Polymethylmethacrylate aus den Beispielen 2 A bis 5 A jeweils im Molverhältnis 1 : 5 mit Butandiol-1,4 umgesetzt werden. Darüber hinaus wird anstelle von Toluol ein Gemisch von Toluol und Triethylenglykoldimethylether als Lösungsmittel eingesetzt und Toluol durch Fraktionierung zur Entfernung von Wasserspuren abgetrennt.

In Tabelle 2 werden die bei der Umesterung verwendeten ω-monohydroxyfunktionellen Polymethacrylate, die Art und das Molverhältnis der verwendeten Diole (Diol/Polymethacrylat), die Reaktionsbedingungen, die Menge des Katalysators, der jeweils zu 1 Gew.-%, bezogen auf die Gesamteinwaage, eingesetzt wird, und die eingesetzte Art und Menge an Lösungsmittel angegeben. Darüber hinaus werden die entsprechenden analytischen Daten angegeben.

Beispiele 7 B bis 9 B

Herstellung von α,ω-difunktionellen Polymethylmethacrylaten unter Verwendung unterschiedlicher Diole (erfindungsgemäß)

Es wird grundsätzlich wie in Beispiel 1 B verfahren mit dem Unterschied, daß, wie aus Tabelle 2 hervorgeht, anstelle

von Butandiol-1,4 verschiedene Diole (Hexandiol-1,6, Cyclohexandiol-1,4 und Triethylenglykol) im Molverhältnis 1 : 5 zum Einsatz kommen.

In Tabelle 2 werden neben den bei der Umesterung verwendeten ω-monohydroxyfunktionellen Polymethacrylaten die Art und das Molverhältnis der verwendeten Diole (Diol/Polymethacrylat), die Reaktionsbedingungen, die Menge des Katalysators, der jeweils zu 1 Gew.-%, bezogen auf die Gesamteinwaage, eingesetzt wird, und die eingesetzte Menge an Toluol angegeben. Darüber hinaus werden die entsprechenden analytischen Daten angegeben.

Beispiel 10 B

Herstellung von α,ω-difunktionellem Poly-n-butylmethacrylat (erfindungsgemäß)

Es wird grundsätzlich wie in Beispiel 1 B verfahren mit dem Unterschied, daß anstelle des Polymethacrylates aus Beispiel 1 A jenes aus Beispiel 6 A eingesetzt wird.

In Tabelle 2 werden neben den bei der Umesterung verwendeten ω-monohydroxyfunktionellen Polymethacrylaten die Art und das Molverhältnis der verwendeten Diole (Diol/Polymethacrylat), die Reaktionsbedingungen, die Menge des Katalysators, der jeweils zu 1 Gew.-%, bezogen auf die Gesamteinwaage, eingesetzt wird, und die eingesetzte Menge an Toluol angegeben. Darüber hinaus werden die entsprechenden analytischen Daten angegeben.

Beispiel 11 B

Herstellung von α,ω-difunktionellem Poly-n-butylmethacrylat höheren Molekulargewichtes (erfindungsgemäß)

Es wird grundsätzlich wie in Beispiel 10 B verfahren mit dem Unterschied, daß anstelle des Polymethacrylates aus Beispiel 6 A das aus Beispiel 7 A eingesetzt wird.

In Tabelle 2 werden neben dem bei der Umesterung verwendeten ω-monohydroxyfunktionellen Polymethacrylat die Art und das Molverhältnis der verwendeten Diole (Diol/Polymethacrylat), die Reaktionsbedingungen, die Menge des Katalysators, der jeweils zu 1 Gew.-%, bezogen auf die Gesamteinwaage, eingesetzt wird, und die eingesetzte Menge an Xylol angegeben. Darüber hinaus werden die entsprechenden analytischen Daten angegeben.

Beispiel 12 B

Herstellung von α,ω-difunktionellem Poly-2-ethylhexylmethacrylat (erfindungsgemäß)

Es wird grundsätzlich wie in Beispiel 1 B verfahren mit dem Unterschied, daß anstelle des Polymethacrylates aus Beispiel 1 A das aus Beispiel 8 A eingesetzt wird.

In Tabelle 2 werden neben dem bei der Umesterung verwendeten ω-monohydroxyfunktionellen Polymethacrylat die Art und das Molverhältnis der verwendeten Diole (Diol/Polymethacrylat), die Reaktionsbedingungen, die Menge des Katalysators, der jeweils zu 1 Gew.-%, bezogen auf die Gesamteinwaage, eingesetzt wird, und die eingesetzte Menge an Toluol angegeben. Darüber hinaus werden die entsprechenden analytischen Daten angegeben.

Beispiel 13 B

Herstellung von α,ω-difunktionellem Poly-2-ethylhexylmethacrylat höheren Molekulargewichtes (erfindungsgemäß)

Es wird grundsätzlich wie in Beispiel 12 B verfahren mit dem Unterschied, daß anstelle des Polymethacrylates aus Beispiel 8 A das aus Beispiel 9 A eingesetzt wird.

In Tabelle 2 werden neben dem bei der Umesterung verwendeten ω-monohydroxyfunktionellen Polymethacrylat die Art und das Molverhältnis der verwendeten Diole (Diol/Polymethacrylat), die Reaktionsbedingungen, die Menge des Katalysators, der jeweils zu 1 Gew.-%, bezogen auf die Gesamteinwaage, eingesetzt wird, und die eingesetzte Menge an Xylol angegeben. Darüber hinaus werden die entsprechenden analytischen Daten angegeben.

Beispiel 14 B

Herstellung eines α,ω-difunktionellen Methylmethacrylat-2-Ethylhexylmethacrylat-Copolymerisates (erfindungsgemäß)

Es wird grundsätzlich wie in Beispiel 1 B verfahren mit dem Unterschied, daß anstelle des Polymethacrylates aus Beispiel 1 A das aus Beispiel 10 A eingesetzt wird.

In Tabelle 2 werden neben dem bei der Umesterung verwendeten ω-monohydroxyfunktionellen Polymethacrylat die Art und das Molverhältnis der verwendeten Diole (Diol/Polymethacrylat), die Reaktionsbedingungen, die Menge des Katalysators, der jeweils zu 1 Gew.-%, bezogen auf die Gesamteinwaage, eingesetzt wird, und die eingesetzte Menge an Xylol angegeben. Darüber hinaus werden die entsprechenden analytischen Daten angegeben.

Tabelle 2

| Beispiel Nr. | Polymethacrylat aus Beispiel Nr. | Menge [g] | Diol Art/M.V./Menge [g] | Reaktionsbedingungen Temp. [°C] | Dauer [h] | IPT Menge [g] | Lösungsmittel Art / Menge [g] | $\bar{M}_{n_{GPC}}$ | $\bar{M}_{w_{GPC}}$ | U | $\bar{M}_{n_{Osm}}$ | $\bar{M}_{n_{OHZ}}$ | f |
|---|---|---|---|---|---|---|---|---|---|---|---|---|---|
| 1 B | 1 A | 1120 | BD / 5 /450 | 130 | 4 | 11,2 | TL / 350 | 1220 | 1950 | 1,6 | 1180 | 1186 | 1,99 |
| 2 B | 1 A | 1120 | BD / 1 / 90 | 130 | 4 | 11,2 | TL / 350 | 1970 | 3350 | 1,7 | 1880 | 1958 | 1,92 |
| 3 B | 2 A | 2350 | BD / 5 /450 | 130 | 5 | 23,5 | TL / 350 | 2630 | 4730 | 1,8 | 2480 | 2530 | 1,96 |
| 4 B | 3 A | 1100 | BD / 5 / 90 | 130 | 5 | 11 | TLTG / 1100 | 5730 | 13750 | 2,4 | 5620 | 5790 | 1,94 |
| 5 B | 4 A | 1080 | BD / 7 / 63 | 130 | 8 | 11 | TLTG / 1350 | 10900 | 30500 | 2,8 | 11100 | 11380 | 1,95 |
| 6 B | 5 A | 1000 | BD /10 / 17 | 130 | 10 | 10 | TLTG / 4000 | 53000 | 165000 | 3,1 | - | 56000 | 1,89 |
| 7 B | 1 A | 1120 | HD / 5 /590 | 130 | 5 | 11 | TL / 350 | 1230 | 1970 | 1,6 | 1190 | 1178 | 2,02 |
| 8 B | 1 A | 1120 | CD / 5 /580 | 130 | 8 | 11 | TL / 350 | 1310 | 2100 | 1,6 | 1200 | 1230 | 1,95 |
| 9 B | 1 A | 1120 | TEG/ 3 /450 | 120 | 10 | 11 | TL / 350 | 1350 | 2160 | 1,6 | 1260 | 1279 | 1,97 |
| 10 B | 6 A | 1140 | BD / 5 /450 | 130 | 6 | 11 | TL / 350 | 1320 | 1980 | 1,5 | 1210 | 1198 | 2,02 |

Tabelle 2 - Fortsetzung

| Beispiel Nr. | Polymethacrylat aus Beispiel Nr. | Menge [g] | Diol Art/M.V./Menge [g] | Reaktionsbedingungen Temp. [°C] | Dauer [h] | IPT Menge [g] | Lösungsmittel Art / Menge [g] | $\bar{M}_{n_{GPC}}$ | $\bar{M}_{w_{GPC}}$ | U | $\bar{M}_{n_{Osm}}$ | $\bar{M}_{n_{OHZ}}$ | f |
|---|---|---|---|---|---|---|---|---|---|---|---|---|---|
| 11 B | 7 A | 2300 | BD / 5 /450 | 130 | 6 | 23 | XY / 350 | 2820 | 4794 | 1,7 | 2640 | 2670 | 1,98 |
| 12 B | 8 A | 1170 | BD / 5 /450 | 130 | 8 | 12 | TL / 350 | 1340 | 2010 | 1,5 | 1250 | 1275 | 1,96 |
| 13 B | 9 A | 2350 | BD / 5 /450 | 130 | 8 | 24 | XY / 700 | 2610 | 4700 | 1,8 | 2480 | 2560 | 1,94 |
| 14 B | 10 A | 1150 | BD / 5 /450 | 130 | 8 | 12 | XY / 350 | 1320 | 2110 | 1,6 | 1240 | 1258 | 1,97 |

Legende:

M.V. = Molverhältnis Diol/Monool
U = Uneinheitlichkeitskoeffizient
f = Funktionalität
BD = Butandiol-1,4
HD = Hexandiol-1,6
CD = Cyclohexandiol-1,4
TEG = Triethylenglykol
IPT = Isopropyltitanat
TL = Toluol
XY = Xylol
TLTG = Gemisch Toluol/Triethylenglykoldimethylether (1 : 1)

Beispiel 1 C

Herstellung eines Polymethylmethacrylat-Polyurethans (erfindungsgemäß)

In einem Reaktor mit einem Rührer werden 118 g (ca. 0,1 Mol) des $\alpha,\omega$-difunktionellen Polymethylmethacrylates aus Beispiel 1 B, gelöst in 118 g Toluol, durch weitgehende Entfernung des Toluols durch Destillation bei 100°C und 1,333 x $10^3$ Pa (10 Torr) von Wasserspuren befreit. Daraufhin wird das ursprüngliche Lösungsvolumen durch Zugabe eines Gemisches von Methylethylketon, Dimethylformamid und Toluol im Gewichtsverhältnis 25/35/40 wieder aufgefüllt, wobei ein Festkörpergehalt von ca. 50 Gew.-% erreicht wird. Nach Erwärmen der erhaltenen Lösung auf 80°C werden zunächst 0,1 g Dibutylzinndilaurat als Katalysator und danach über einen Zeitraum von 15 Minuten 13,4 g (ca. 0,08 Mol) Hexamethylendiisocyanat unter Reinstickstoff zugegeben. Nach Ablauf von ca. 4 Stunden wird ein Isocyanatwert von 0 ermittelt, womit die Reaktion beendet ist.

Es wird eine klare, farblose und mittelviskose Lösung erhalten. Aus der Hydroxylzahl des erhaltenen Produktes ergibt sich ein Molekulargewicht $\overline{M}_{OHZ}$ von 6500. Die gelchromatographische Untersuchung ergibt ein numerisches Molekulargewicht $\overline{M}_n$ von 7200 und ein Gewichtsmittel des Molekulargewichtes $\overline{M}_w$ von 17300; der Uneinheitlichkeitskoeffizient beträgt demnach 2,4.

Beispiele 2 C und 3 C

Herstellung von Polymethylmethacrylat-Polyurethanen unterschiedlichen Molekulargewichtes (erfindungsgemäß)

Es wird verfahren wie in Beispiel 1 C mit dem Unterschied, daß das molare Verhältnis von $\alpha,\omega$-difunktionellem Polymethylmethacrylat und Hexamethylendiisocyanat, wie in der Tabelle 3 angegeben, verringert wird. Darüber hinaus wird, wie ebenfalls angegeben, der Feststoffgehalt herabgesetzt.

In der Tabelle 3 sind die aus der Hydroxylzahl und aus der Gelpermeationschromatographie ermittelten Molekulargewichte angegeben.

Beispiele 4 C und 5 C

Herstellung von Polyurethanen mit Poly-n-butyl- bzw. Poly-2-ethylhexylmethacrylat-Segmenten (erfindungsgemäß)

Es wird verfahren wie in Beispiel 1 C mit dem Unterschied, daß an Stelle von $\alpha,\omega$-difunktionellem Polymethylmethacrylat $\alpha,\omega$-Poly-n-butyl-bzw. Poly-2-ethylhexylmethacrylatdiol eingesetzt werden.

In der Tabelle 3 sind die aus der Hydroxylzahl und aus der Gelpermeationschromatographie ermittelten Molekulargewichte angegeben.

Tabelle 3

| Beispiel Nr. | PMA-Diol aus Beispiel Nr. | Menge [g] | HDI Menge [g] | Mol.Verh. (Diol/HDI) | Festkörper [%] | $\bar{M}_{n\,OHZ}$ | $\bar{M}_{n\,GPC}$ | $\bar{M}_{w\,GPC}$ | U |
|---|---|---|---|---|---|---|---|---|---|
| 1 C | 1 B | 118 | 13,4 | 5/ 4 | 50 | 6500 | 7200 | 17300 | 2,4 |
| 2 C | 1 B | 118 | 15,1 | 10/ 9 | 40 | 13000 | 15100 | - | - |
| 3 C | 1 B | 118 | 16,0 | 20/19 | 35 | 26000 | 31000 | - | - |
| 4 C | 10 B | 112 | 16,0 | 20/19 | 40 | 28000 | 24500 | - | - |
| 5 C | 13 B | 256 | 15,1 | 10/ 9 | 50 | 26000 | 22500 | - | - |

HDI = Hexamethylendiisocyanat

Beispiel 6 C

Herstellung eines Polymethylmethacrylat-Polyesters (erfindungsgemäß)

In einem Reaktor mit einem Rührer werden 118 g (ca. 0,1 Mol) des $\alpha,\omega$-Polymethylmethacrylatdiols aus Beispiel

1 B, gelöst in 118 g Toluol, durch weitgehende Entfernung des Toluols durch Destillation bei 100°C und 1,333 x $10^3$ Pa (10 Torr) von Wasserspuren befreit. Durch Zugabe von getrocknetem Toluol wird das ursprüngliche Lösungsvolumen wieder aufgefüllt, wobei ein Festkörpergehalt von ca. 50 Gew.-% eingestellt wird. Nach Erwärmen der erhaltenen Lösung auf 40°C werden 14,6 g (ca. 0,08 Mol) Adipinsäuredichlorid entsprechend einem Molverhältnis Diol/Disäurechlorid von 5 / 4 unter Reinstickstoff tropfenweise über einen Zeitraum von 10 Minuten zugegeben. Anschließend wird auf die Rückflußtemperatur von 110°C unter gleichzeitigem Durchleiten von Reinstickstoff erwärmt, wobei der entstehende Chlorwasserstoff entfernt wird. Nach Ablauf von ca. 4 Stunden wird eine Säurezahl von etwa 1 ermittelt, womit die Reaktion beendet ist.

Es wird eine klare, leicht gelbliche und mittelviskose Lösung erhalten. Aus der Hydroxylzahl des erhaltenen Produktes ergibt sich ein Molekulargewicht $\overline{M}_{OHZ}$ von 6300. Die gelchromatographische Untersuchung ergibt ein numerisches Molekulargewicht $\overline{M}_n$ von 6800 und ein Gewichtsmittel des Molekulargewichtes $\overline{M}_w$ von 15600; der Uneinheitlichkeitskoeffizient beträgt demnach 2,3.

## Patentansprüche

**1.** α,ω-Polymethacrylatdiole der allgemeinen Formel

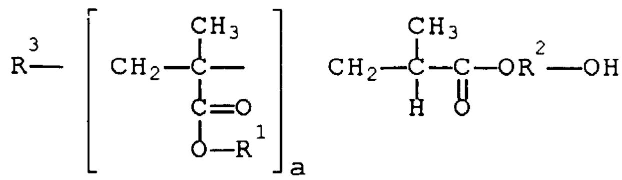

wobei

$R^1$ ein gegebenenfalls halogenierter Alkylrest mit 1 bis 10 Kohlenstoffatomen ist,

$R^2$ (1) ein zweiwertiger aliphatischer, gegebenenfalls ungesättigter Kohlenwasserstoffrest mit 2 bis 20 Kohlenstoffatomen, ein cycloaliphatischer Kohlenwasserstoffrest mit 5 bis 10 Kohlenstoffatomen oder ein aliphatisch-aromatischer Kohlenwasserstoffrest mit 8 bis 20 Kohlenstoffatomen,
(2) ein zweiwertiger aliphatischer Etherrest $-R^5-O-R^6-$, dessen Reste $R^5$ und $R^6$ zusammen 4 bis 20 Kohlenstoffatome aufweisen, oder
(3) ein Polyetherrest der allgemeinen Formel $-(C_nH_{2n}O)_m-C_pH_{2p}-$, wobei der Index n einen Wert von 2 bis 4, der Index m einen Wert von $\geqq 1$ und der Index p einen Wert von 2, 3 oder 4 hat,
ist,

$R^3$ der Rest $-S-CH_2CH_2-OH$, $-S-CH_2CH_2CH_2CH_2-OH$, $-S-CH_2CH_2CH_2CH_2CH_2CH_2-OH$ oder $-S-CH_2-C_6H_4-CH_2OH$ ist und

a einen Wert von $\geqq 4$ hat.

**2.** Verfahren zur Herstellung der α,ω-Polymethacrylatdiole nach Anspruch 1, dadurch gekennzeichnet, daß man durch radikalische Polymerisation in Gegenwart eines Kettenreglers erhaltene Polymethacrylsäureester der allgemeinen Formel

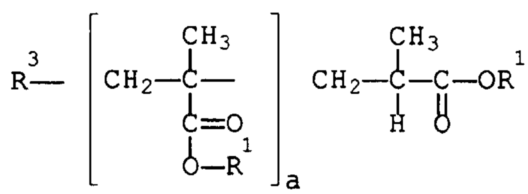

wobei die Reste $R^1$ und $R^3$ und der Index a die bereits angegebene Bedeutung haben, mit einem Diol der Formel $HO-R^2-OH$ bei Temperaturen von 70 bis 140 °C, gegebenenfalls in Gegenwart von Lösungsmitteln, unter Zusatz von an sich bekannten nichtbasischen Umesterungskatalysatoren in einem molaren Verhältnis von Polymethacrylsäureester : $HO-R^2-OH$ von 1 : 1 bis 1 : 10 umestert und den Überschuß an nichtumgesetztem Diol

in an sich bekannter Weise durch Destillation oder Auswaschen mit einem Lösungsmittel, in welchem das Diol löslich, das Polymere jedoch unlöslich ist, entfernt.

3. Verfahren zur Herstellung der α,ω-Polymethacrylatdiole nach Anspruch 2, dadurch gekennzeichnet, daß man die Umesterung in einem molaren Verhältnis von Polymethacrylsäureester : HO-$R^2$-OH von 1 ; 1 bis 1 : 5 durchführt.

4. Verfahren nach Anspruch 2, dadurch gekennzeichnet, daß man als Umesterungskatalysatoren Alkyltitanat, Alkylzirkonat, Dialkylzinnacetathalogenid oder Dialkylzinndialkylester in Mengen von 0,5 bis 2 Gew.-%, bezogen auf Polymethacrylsäureester, verwendet.

5. Verwendung von Verbindungen nach Anspruch 1 als alleinige oder anteilige Diolkomponente bei der Herstellung von Polyestern, Polyurethanen und zur Modifizierung von Alkyd- und Epoxidharzen.

## Claims

1. α,ω-Polymethacrylatediols of the general formula

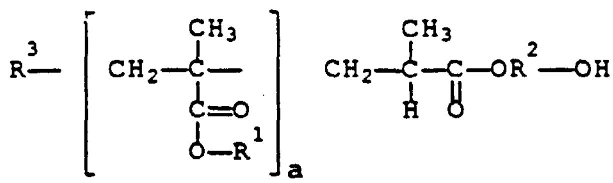

where

$R^1$ is a halogenated or whalogenated alkyl radical having from 1 to 10 carbon atoms,
$R^2$ is

(1) a divalent aliphatic, saturated or unsaturated hydrocarbon radical having from 2 to 20 carbon atoms, a cycloaliphatic hydrocarbon radical having from 5 to 10 carbon atoms or an aliphaticaromatic hydrocarbon radical having from 8 to 20 carbon atoms,
(2) a divalent aliphatic ether radical -$R^5$-O-$R^6$-, whose radicals $R^5$ and $R^6$ together have from 4 to 20 carbon atoms, or
(3) a polyether radical of the general formula $-(C_nH_{2n}O)_m-C_pH_{2p}-$, where the index n has a value from 2 to 4, the index m has a value of ≥ 1 and the index p has a value of 2, 3 or 4,

$R^3$ is the radical $-S-CH_2CH_2-OH$, $-S-CH_2CH_2CH_2CH_2-OH$, $-S-CH_2CH_2CH_2CH_2CH_2CH_2-OH$ or $-S-CH_2-C_6H_4-CH_2OH$ and
a has a value of ≥ 4.

2. Process for preparing the α,ω-polymethacrylatediols according to Claim 1, characterized in that polymethacrylic esters of the general formula

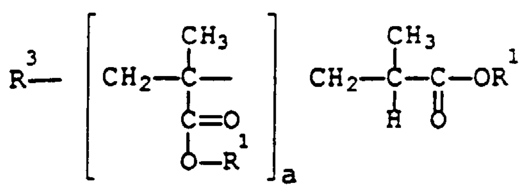

where the radicals $R^1$ and $R^3$ and the index a are as defined above, obtained by free-radical polymerization in the presence of a chain regulator are transesterified with a diol of the formula HO-$R^2$-OH at temperatures of from 70 to 140°C, in the presence or absence of solvents, with addition of non-basic transesterification catalysts known per se in a molar ratio of polymethacrylic ester : HO-$R^2$-OH of from 1 : 1 to 1 : 10 and the excess of unreacted diol

is removed in a manner known per se by distillation or scrubbing with a solvent in which the diol is soluble but the polymer is insoluble.

**3.** Process for preparing the α,ω-polymethacrylatediols according to Claim 2, characterized in that the transesterification is carried out at a molar ratio of polymethacrylic ester : $HO-R^2-OH$ of from 1 : 1 to 1 : 5.

**4.** Process according to Claim 2, characterized in that the transesterification catalysts used are alkyl titanate, alkyl zirconate, dialkyltin acetate halide or dialkyltin dialkyl ester in amounts of from 0.5 to 2% by weight, based on polymethacrylic ester.

**5.** Use of compounds according to Claim 1 as sole or contributory diol component in the preparation of polyesters, polyurethanes and for modifying alkyd and epoxy resins.

## Revendications

**1.** α,ω-Diols à base de polyméthacrylate de formule générale

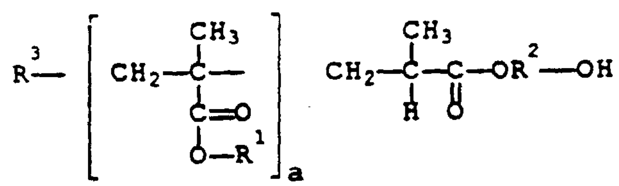

dans laquelle

$R^1$ est un radical alcoyle facultativement halogéné ayant 1 à 10 atomes de carbone;
$R^2$ est

(1) un radical hydrocarbure aliphatique bivalent, facultativement insaturé, avec 2 à 20 atomes de carbone, un radical hydrocarbure cycloaliphatique avec 5 à 10 atomes de carbone ou un radical hydrocarbure aliphatique-aromatique avec 8 à 20 atomes de carbone,
(2) un radical éther aliphatique bivalent $-R^5-O-R^6-$, dont les radicaux $R^5$ et $R^6$ présentent ensemble 4 à 20 atomes de carbone, ou
(3) un radical polyéther de formule générale $-(C_nH_{2n}O)_m-C_pH_{2p}-$, où l'indice n a une valeur de 2 à 4, l'indice m une valeur ≥ 1 et l'indice p la valeur 2, 3 ou 4;

$R^3$ est le radical $-S-CH_2CH_2-OH$, $-S-CH_2CH_2CH_2CH_2-OH$, $-S-CH_2CH_2CH_2CH_2CH_2CH_2-OH$ ou $-S-CH_2-C_6H_4-CH_2OH$, et
a a une valeur ≥ 4.

**2.** Procédé de préparation des α,ω-diols à base de polyméthacrylate suivant la revendication 1, caractérisé en ce que l'on transestérifie par polymérisation radicalaire en présence d'un poly(ester méthacrylique) contenant un régulateur de chaîne de formule générale

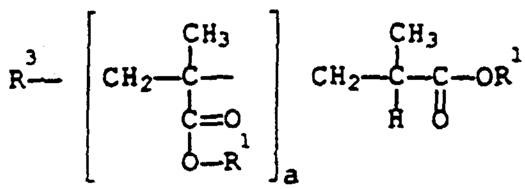

où les radicaux $R^1$ et $R^3$ et l'indice a ont les significations déjà données, avec un diol de formule $HO-R^2-OH$, à des températures de 70 à 140°C, facultativement en présence de solvants, par addition de catalyseurs de transestérification non basiques connus en soi, en un rapport molaire de poly(ester méthacrylique) : $HO-R^2-OH$ de 1:

1 à 1:10 et l'excès de diol n'ayant pas réagi est séparé de manière connue en soi, par distillation ou lavage avec un solvant, dans lequel le diol est soluble alors que le polymère ne l'est pas.

**3.** Procédé de préparation des α,ω-diols à base de polyméthacrylate suivant la revendication 2, caractérisé en ce que l'on réalise la transestérification en un rapport molaire de poly(ester méthacrylique) : $HO-R^2-OH$ de 1:1 à 1:5.

**4.** Procédé suivant la revendication 2, caractérisé en ce que l'on utilise comme catalyseur de transestérification, un titanate d'alcoyle, zirconate d'alcoyle, halogénure d'acétate de dialcoylétain ou alcoylester de dialcoylétain en des quantités de 0,5 à 2% en poids, sur base de poly(ester méthacrylique).

**5.** Utilisation de composés suivant la revendication 1, comme composants diols seuls ou en mélange, lors de la préparation de polyesters, polyuréthannes et pour la modification de résines alkydes et époxydes.